# FASCICULE DE BREVET EUROPEEN

(11) **EP 0 972 929 B1**
(45) Date de publication et mention de la délivrance du brevet: **22.12.2004**
(21) Numéro de dépôt: 99401708.5
(22) Date de dépôt: 08.07.1999
(51) Int. Cl.: F02K 1/12, F02K 1/11, F02K 1/82

(54) **Tuyère d'éjection de turboréacteur à masquage du jet de gaz**
Strahltriebdüse mit Vorrichtung zur Maskierung des Gasstrahls
Gas jet masking ejection nozzle for turbojet

(30) Priorité: 17.07.1998 FR 9809129
(43) Date de publication de la demande: 19.01.2000
(73) Titulaire: Snecma Moteurs, 75015 Paris (FR)
(72) Inventeur: Bouiller, Philippe Pierre Vincent, 77210 Samoreau (FR); Kettler, Daniel, 77590 Chartrettes (FR); Bourquin, Pierre-Yves, 75012 Paris (FR); Ruis, Jean-Pierre, 77820 le Chatelet en Brie (FR)

(56) Documents cités:
- EP-A- 0 646 720
- FR-A- 1 479 351
- US-A- 3 981 143
- US-A- 4 312 480
- US-A- 4 641 782
- US-A- 4 993 641

## Description

L'invention concerne une tuyère d'éjection à section d'éjection variable, montée à l'extrémité aval d'une structure fixe de section circulaire d'un canal d'éjection des gaz chauds d'un turboréacteur.

Certains avions militaires équipés de turboréacteurs doivent pouvoir assurer des missions dans des conditions de vol subsonique ou supersonique. Ces turboréacteurs sont dotés d'un système de réchauffe et d'une tuyère de type axisymétrique ou autre, bidimensionnel par exemple.

Pour les turbomachines pourvues de réchauffe, la tuyère doit être de section variable.

Afin d'obtenir un gain de poussée aux régimes plein gaz sec et plein gaz avec réchauffe, l'évolution s'est faite vers une tuyère complète convergente et divergente à sections variables. Une telle tuyère est décrite dans le document US-A-4 993 641. La cinématique et la technologie de ces tuyères convergentes/divergentes sont complexes, et leur masse est importante.

Dans la plupart des cas, la tuyère est limitée à sa partie convergente, ce qui permet d'utiliser une technologie relativement simple et donnant des résultats satisfaisants.

Cest ce type de tuyère axisymétrique qui fait l'objet de l'invention.

L'invention concerne plus précisément une tuyère axisymétrique convergente pour turboréacteur d'aviation, cette tuyère comportant une virole conique fixée à la partie terminale du turboréacteur, une couronne intérieure de volets, dits volets chauds, disposée dans le prolongement de la virole conique, une couronne extérieure de volets, dits volets froids, disposée dans le prolongement d'une structure annulaire prévue entre la virole conique et un capotage extérieur, ladite couronne extérieure de volets froids s'étendant vers l'aval, dans le sens du flux des gaz d'éjection, au-delà du capotage extérieur et de la couronne intérieure de volets chauds, des premiers moyens de commande portés par la virole conique et destinés à actionner les volets chauds qui sont articulés à leur extrémité amont sur la virole conique, et des deuxièmes moyens de commande portés par la structure annulaire et destinés à actionner les volets froids qui sont articulés à leur extrémité amont sur la structure annulaire.

L'invention s'est donné pour but de diminuer la signature infrarouge de ce type de tuyère en fournissant des moyens simples pour introduire de l'air frais dans le flux des gaz d'éjection, dans certaines configurations de la tuyère, afin de réduire la vitesse de l'écoulement et sa température.

L'invention atteint son but par le fait que chaque volet froid comporte une peau intérieure articulée sur la structure annulaire et présentant une pluralité d'orifices, et une peau extérieure radialement espacée de la peau intérieure, ces deux peaux convergeant vers le bord de fuite dudit volet, et par le fait que la structure annulaire est mobile axialement, sous l'action de troisièmes moyens de commande, entre une première position dans laquelle les peaux extérieures sont dans le prolongement du capotage extérieur et une deuxième position dans laquelle les peaux extérieures sont en aval du capotage externe et constituent une écope permettant d'injecter de l'air extérieur dans le flux des gaz d'éjection par les orifices des peaux intérieures afin de diminuer la signature infrarouge des gaz éjectés.

Avantageusement, des orifices complémentaires sont prévus dans le bord de fuite de chaque volet froid.

Les avantageuses dispositions suivantes sont en outre adoptées :
- les premiers moyens de commande comportent un premier anneau de commande mobile axialement, relié aux volets chauds par des biellettes et actionné par une pluralité de premiers vérins ancrés sur la virole conique ;
- les deuxièmes moyens de commande comportent un deuxième anneau de commande mobile axialement sous l'action d'une pluralité de deux vérins ancrés sur la structure annulaire ;
- le deuxième anneau de commande comporte une pluralité de doigts équipés de galets qui roulent dans les lumières prévues sur les peaux intérieures des volets froids ;
- la virole conique est liée, à son extrémité amont, à une virole cylindrique qui s'étend vers l'aval, cette virole cylindrique comportant des moyens pour le guidage axial de la structure annulaire, les troisièmes moyens de commande comportent une pluralité de troisièmes vérins ancrés à l'extrémité amont de la virole cylindrique.

D'autres avantages et caractéristiques de l'invention ressortiront à la lecture de la description suivante faite à titre d'exemple et en référence aux dessins annexés dans lesquels :

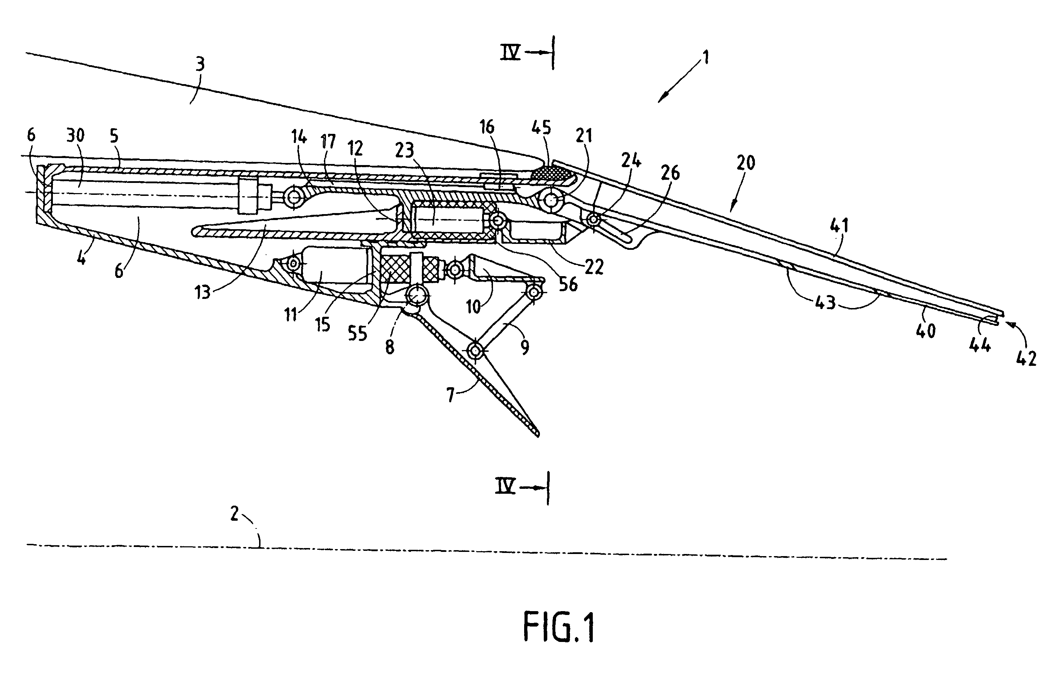

la figure 1 est une demi-coupe, selon un plan passant par l'axe de symétrie, d'une tuyère axisymétrique conforme à l'invention dans une configuration de fonctionnement plein gaz sans postcombustion et sans atténuation de la signature infrarouge ;
la figure 2 montre la tuyère de la figure 1 dans une configuration de fonctionnement plein gaz sans postcombustion et avec atténuation de la signature infrarouge ;

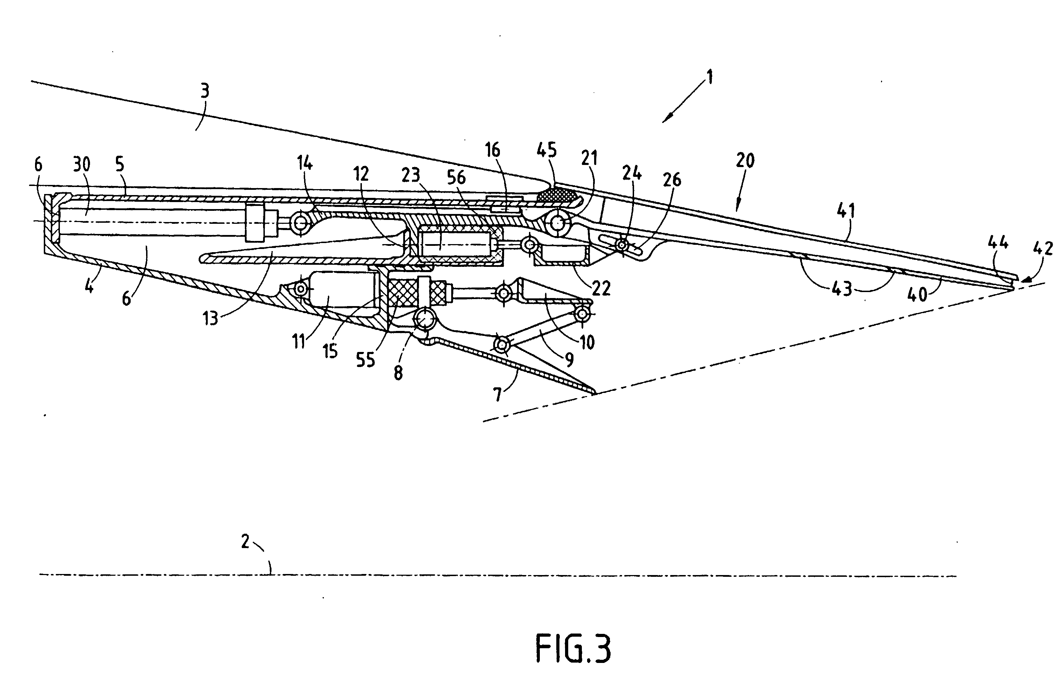

la figure 3 représente la tuyère de la figure 1 dans une configuration de fonctionnement plein gaz avec postcombustion et sans atténuation de la signature infrarouge ;
la figure 4 est une coupe selon la ligne IV-IV de la figure 1 qui montre la liaison entre les volets froids et l'anneau de commande de ces volets ;
la figure 5 montre en détail la liaison entre l'anneau de commande et un volet froid ; et
la figure 6 montre en détail la liaison entre une tige de vérin et l'anneau de commande actionné par ce vérin.

Le dessin montre une tuyère 1 d'axe 2 disposée en aval d'une chambre postcombustion, non représentée sur les dessins, d'un turboréacteur équipant un avion dont le culot comporte un capotage extérieur 3, de forme aérodynamique, entourant la partie avant de la tuyère 1.

La tuyère 1 comporte une virole conique 4 fixée en amont à l'extrémité aval du carter de la chambre de post-combustion et une virole cylindrique 5 disposée au voisinage du capotage extérieur 3, et reliée par son extrémité amont 6 à la virole conique 4. La virole conique 4 et la virole cylindrique 5 délimitent entre elles une cavité annulaire 6, ouverte vers l'aval.

Une première couronne de volets 7, dits volets chauds, est disposée dans le prolongement de la virole conique 4. Chaque volet chaud 7 est articulé, à son extrémité amont, à l'extrémité aval de la virole conique 4 au moyen d'un axe d'articulation 8 et il est relié par une biellette 9 à un premier anneau de commande 10 concentrique à l'axe 2. Le premier anneau de commande 10 est déplaçable dans la direction définie par l'axe 2 au moyen d'une pluralité de premiers vérins 11 ancrés sur la virole conique 4 dans la cavité 6. Les vérins 11, qui sont synchronisés, sont montés de manière fixe par rapport à la virole conique 4.

Entre la virole conique 4 et la virole cylindrique 5 est prévue une structure annulaire 12 d'axe 2, qui est déplaçable selon la direction de l'axe 2.

La structure annulaire 12 est constituée par deux viroles cylindriques 13, 14 et concentriques d'axe 2, solidaires entre elles. La virole cylindrique intérieure 13 peut coulisser sur des épaulements 15 formés sur la face externe de la virole conique 4 et la virole cylindrique extérieure 14 est guidée axialement par rapport à la virole cylindrique 5 de la tuyère 1, au moyen de galets 16 fixés sur cette virole cylindrique 5 et coopérant avec des rainures 17 axiales formées sur la face extérieure de la virole cylindrique extérieure 14.

Une deuxième couronne de volets 20, dits volets froids est disposée en aval de la virole cylindrique externe 14, chaque volet froid 20 étant articulé, par son extrémité amont, au moyen d'un axe d'articulation 21 sur l'extrémité aval de la virole cylindrique extérieure 14. Les volets froids 20 sont commandés par un deuxième anneau de commande 22, d'axe 2, déplaçable dans la direction de l'axe 2, au moyen d'une pluralité de deuxièmes vérins 23 synchronisés et fixés sur la structure annulaire 12. La liaison entre le deuxième anneau de commande 22 et les volets froids 20 est réalisée par des doigts 24 solidaires du deuxième anneau de commande 22. Ces doigts 24 sont équipés de galets 25 qui roulent dans des lumières 26 formées sur les faces internes des volets froids 20.

Une troisième série de vérins 30 synchronisés est interposée entre l'extrémité amont de la virole conique 4 et la virole cylindrique extérieure 14 de la structure annulaire 12.

Chaque volet froid 20 comporte une peau intérieure 40 dont l'extrémité amont est articulée sur la structure annulaire 12 et une peau extérieure 41, écartée axialement par rapport à la peau intérieure 40. Ces deux peaux 40 et 41 convergent vers le bord de fuite 42. La peau intérieure comporte une pluralité d'orifices 43 dirigés vers la sortie de la tuyère. En outre, une pluralité d'orifices 44 sont ménagés dans le bord de fuite 42.

Lorsque les vérins 30 sont rétractés, la peau extérieure 41 de chaque volet froid 20 est située dans le prolongement du capotage extérieur 3. Un joint 45, disposé entre l'extrémité aval de la virole cylindrique 5 et l'extrémité aval du capotage extérieur 3, assure la continuité de l'écoulement du flux externe entre le capotage extérieur 3 et la peau extérieure 41.

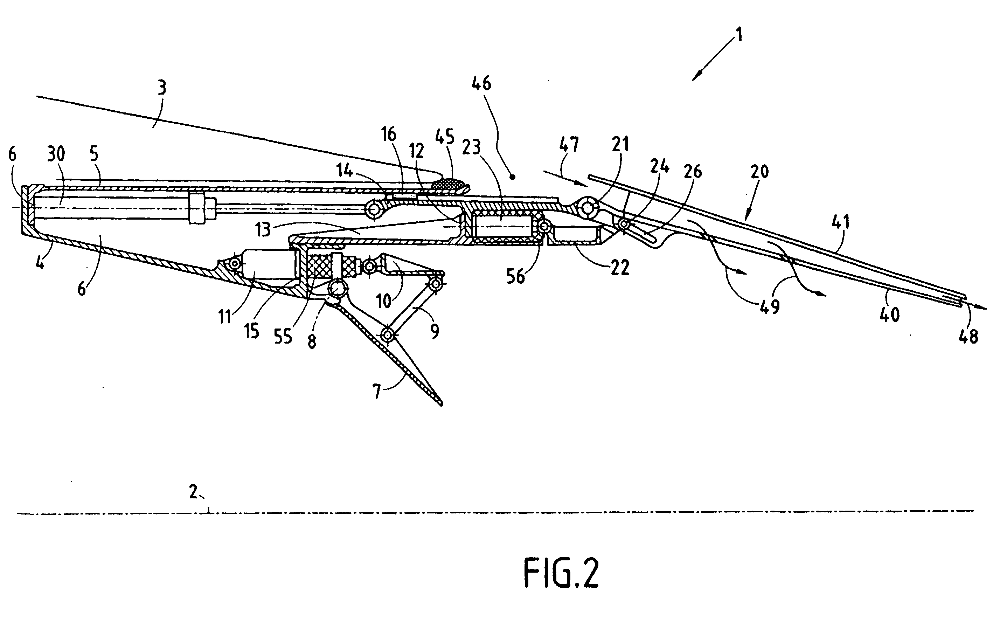

Lorsqu'au contraire, les vérins 30 sont en extension, ainsi que cela est montré sur la figure 2, la structure annulaire 12 et les volets froids 20 sont déplacés vers l'aval. Dans cette situation, l'étanchéité au niveau du joint 45 est rompue avec les peaux extérieures 41 des volets froids 20 et un passage 46 se forme entre le joint 45 et les peaux extérieures 41.

Il se produit alors un écopage d'air 47 en aval des peaux extérieures 41. Ce débit d'air 47 passe entre les peaux extérieures 41 et intérieures 40 des volets froids 20. Une partie 48 de ce débit est évacuée au bord de fuite 42 des volets froids 20 par les orifices 44, et l'autre partie 49 est réintroduite par les orifices 43 des peaux intérieures 40 dans le flux de gaz chauds d'éjection de la tuyère 1.

Ce débit d'air frais 47 permet, d'une part, de refroidir les volets froids 20 et, d'autre part, d'abaisser la température d'éjection des gaz, ce qui diminue la signature infrarouge du moteur. La valeur du débit d'air frais peut varier en fonction de la position angulaire des volets froids 20.

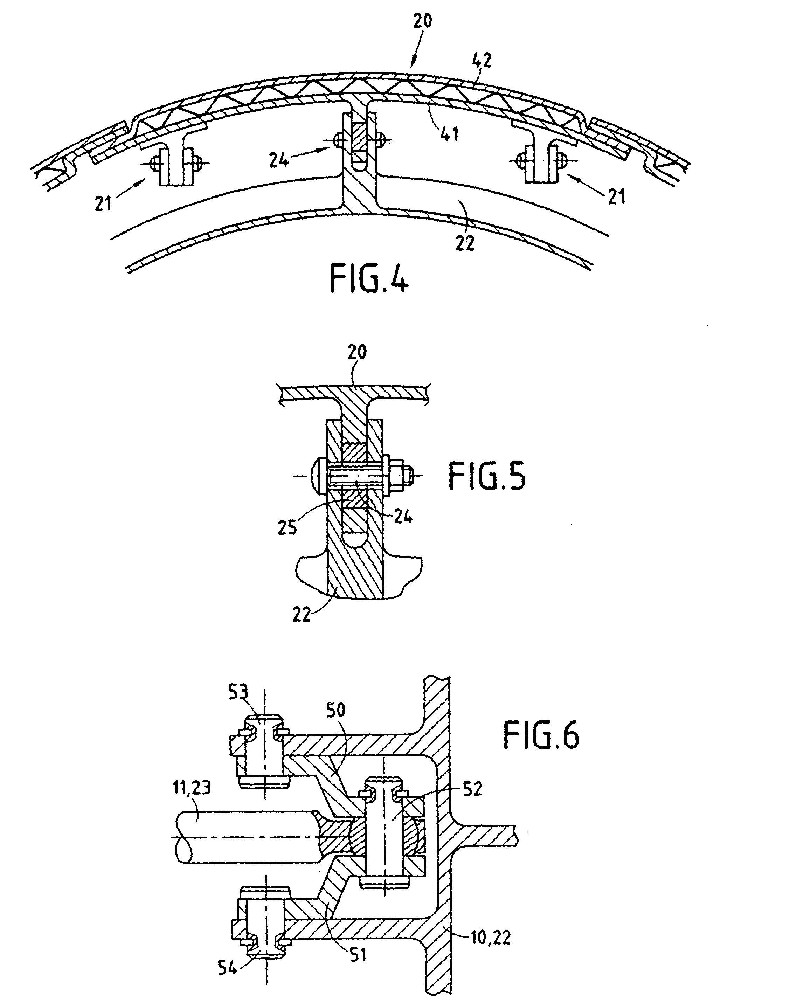

La figure 6 montre la liaison des tiges des vérins 11 et 23 sur les anneaux de commande 10 et 22. Des biellettes 50 et 51 sont interposés entre une broche 52 solidaire de la tête de vérin et des broches coaxiales 53, 54 portées par l'anneau correspondant. En outre, les tiges des vérins 11 et les vérins 23 sont protégés de la température ambiante par des calorifugeages 55 et 56.

Les premiers vérins 11 permettent de déplacer axialement le premier anneau de commande 10, ce qui entraîne une variation de l'inclinaison des volets chauds 7 par rapport à l'axe 2.

Les troisièmes vérins 30 permettent de déplacer ensemble et axialement la structure annulaire 12 et les volets froids 20, sans modifier l'inclinaison de ces derniers.

Il est à noter que lorsque les vérins 30 sont rétractés, les volets froids 20 sont dans le prolongement du capotage extérieur 3 et sont disposés sensiblement en aval des volets chauds 7.

## Revendications

1. Tuyère axisymétrique convergente pour turboréacteur d'aviation, cette tuyère comportant une virole conique (4) fixée à la partie terminale du turboréacteur, une couronne intérieure de volets, dits volets chauds (7) disposés dans le prolongement de la virole conique (4), une couronne extérieure de volets, dits volets froids (20), disposée dans le prolongement d'une structure annulaire (12) prévue entre la virole conique (4) et un capotage extérieur (3), ladite couronne extérieure de volets froids (20) s'étendant vers l'aval, dans le sens du flux des gaz d'éjection, au-delà du capotage extérieur (3) et de la couronne intérieure de volets chauds (7), des premiers moyens de commande (11, 10) portés par la virole conique (4) et destinés à actionner les volets chauds (7) qui sont articulés à leur extrémité amont sur la virole conique (4), et des deuxièmes moyens de commande (23, 22) portés par la structure annulaire (12) et destinés à actionner les volets froids (20) qui sont articulés à leur extrémité amont sur la structure annulaire (12),
**caractérisée par le fait que** chaque volet froid (20) comporte une peau intérieure (40) articulée sur la structure annulaire (12) et présentant une pluralité d'orifices (43), et une peau extérieure (41) radialement espacée de la peau intérieure (40), ces deux peaux (40, 41) convergeant vers le bord de fuite (42) dudit volet (20), et **par le fait que** la structure annulaire (12) est mobile axialement, sous l'action de troisièmes moyens de commande (30), entre une première position dans laquelle les peaux extérieures (41) sont dans le prolongement du capotage extérieur (3) et une deuxième position dans laquelle les peaux extérieures (41) sont en aval du capotage externe (3) et constituent une écope permettant d'injecter de l'air extérieur dans le flux des gaz d'éjection par les orifices (43) des peaux intérieures (40) afin de diminuer la signature infrarouge des gaz éjectés.

2. Tuyère selon la revendication 1, **caractérisée par le fait que** des orifices complémentaires (44) sont prévus dans le bord de fuite (42) de chaque volet froid (20).

3. Tuyère selon l'une des revendications 1 ou 2, **caractérisée par le fait que** les premiers moyens de commande comportent un premier anneau de commande (10) mobile axialement, relié aux volets chauds (7) par des biellettes (9) et actionné par une pluralité de premiers vérins (11) ancrés sur la virole conique (4).

4. Tuyère selon l'une des revendications 1 à 3, **caractérisée par le fait que** les deuxièmes moyens de commande comportent un deuxième anneau de commande (22) mobile axialement sous l'action d'une pluralité de deuxièmes vérins (23) ancrés sur la structure annulaire (12).

5. Tuyère selon la revendication 4, **caractérisée par le fait que** le deuxième anneau de commande (23) comporte une pluralité de doigts (24) équipés de galets (25) qui roulent dans les lumières (26) prévues sur les peaux intérieures des volets froids (20).

6. Tuyère selon l'une des revendications 1 à 5, **caractérisée par le fait que** la virole conique (4) est liée, à son extrémité amont, à une virole cylindrique (5) qui s'étend vers l'aval, cette virole cylindrique (5) comportant des moyens pour le guidage axial de la structure annulaire, (12), et **par le fait que** les troisièmes moyens de commande comportent une pluralité de troisièmes vérins (30) ancrés à l'extrémité amont de la virole cylindrique (5).

7. Tuyère selon la revendication 6, **caractérisée par le fait que** les moyens de guidage comportent des galets (16) coopérant avec les rainures (17).

## Claims

1. Convergent axisymmetric nozzle for an aviation turbojet, this nozzle comprising a conical shell (4) fastened to the terminal part of the turbojet, an inner circle of flaps, called hot flaps (7), arranged in the continuation of the conical shell (4), an outer circle of flaps, called cold flaps (20), arranged in the continuation of an annular structure (12) provided between the conical shell (4) and an outer cowling (3), the said outer circle of cold flaps (20) extending downstream, in the direction of the stream of exhaust gases, beyond the outer cowling (3) and the inner circle of hot flaps (7), first control means (11, 10) borne by the conical shell (4) and intended to activate the hot flaps (7) which are hinged at their upstream end on the conical shell (4), and second control means (23, 22) borne by the annular structure (12) and intended to actuate the cold flaps (20) which are hinged at their upstream end on the annular structure (12), **characterized in that** each cold flap (20) comprises an inner skin (40) hinged on the annular structure (12) and having a plurality of orifices (43), and an outer skin (41) radially spaced from the inner skin (40), these two skins (40, 41) converging towards the trailing edge (42) of the said flap (20), and **in that** the annular structure (12) can move axially, under the action of third control means (30), between a first position in which the outer skins (41) are in the continuation of the outer cowling (3) and a second position in which the outer skins (41) are downstream of the external cowling (3) and constitute a scoop allowing outside air to be injected into the stream of exhaust gases through the orifices (43) of the inner skins (40) in order to reduce the infrared signature of the exhausted gases.

2. Nozzle according to Claim 1, **characterized in that** additional orifices (44) are provided in the trailing edge (42) of each cold flap (20).

3. Nozzle according to either of Claims 1 and 2, **characterized in that** the first control means comprise a first control ring (10) which can move axially and which is connected to the hot flaps (7) by connecting rods (9) and actuated by a plurality of first actuators (11) anchored on the conical shell (4).

4. Nozzle according to one of Claims 1 to 3, **characterized in that** the second control means comprise a second control ring (22) which can move axially under the action of a plurality of second actuators (23) anchored on the annular structure (12).

5. Nozzle according to Claim 4, **characterized in that** the second control ring (22) comprises a plurality of fingers (24) equipped with rollers (25) which roll in the slots (26) provided in the inner skins of the cold flaps (20).

6. Nozzle according to one of Claims 1 to 5, **characterized in that** the conical shell (4) is linked, at its upstream end, to a cylindrical shell (5) which extends downstream, this cylindrical shell (5) comprising means for axially guiding the annular structure (12), and **in that** the third control means comprise a plurality of third actuators (30) anchored at the upstream end of the cylindrical shell (5).

7. Nozzle according to Claim 6, **characterized in that** the guide means comprise rollers (16) which interact with the grooves (17).

## Patentansprüche

1. Konvergierende axialsymmetrische Düse für Turbotriebwerke im Flugzeugbau, wobei diese Düse einen konischen Ring (4), der am Endteil des Turbotriebwerks befestigt ist, einen Innenkranz von Klappen, sogenannten heißen Klappen (7), die in der Verlängerung des konischen Rings (4) angeordnet ist, einen Außenkranz von Klappen, sogenannten kalten Klappen (20), die in der Verlängerung eines ringförmigen Aufbaus (12) zwischen dem konischen Ring (4) und einer Außenverkleidung (3) angeordnet ist, aufweist, wobei dieser Außenkranz von kalten Klappen (20) sich nach hinten in Strömungsrichtung der Schubgase über die Außenverkleidung (3) und den Innenkranz von heißen Klappen (7) hinaus erstreckt, und ferner erste Steuermittel (10, 11), die an dem konischen Ring (4) sitzen und dazu bestimmt sind, die heißen Klappen (7) zu betätigen, die mit ihrem vorderen Ende an dem konischen Ring (4) angelenkt sind, und zweite Steuermittel (23, 22), die an dem ringförmigen Aufbau (12) sitzen und dazu bestimmt sind, die kalten Klappen (20) zu betätigen, die mit ihrem vorderen Ende an dem ringförmigen Aufbau (12) angelenkt sind, aufweist,
**dadurch gekennzeichnet,**
**dass** jede kalte Klappe (20) eine Innenhaut (40), die an dem ringförmigen Aufbau (12) angelenkt ist und eine Vielzahl von Öffnungen (43) aufweist, und eine Außenhaut (41), die radial von der Innenhaut (40) beabstandet ist, besitzt, wobei diese beiden Häute (40, 41) zur Hinterkante (42) dieser Klappe (20) hin konvergieren, und dass der ringförmige Aufbau (12) unter Einwirkung von dritten Steuermitteln (30) axial bewegbar ist, und zwar zwischen einer ersten Stellung, in der die Außenhäute (41) sich in der Verlängerung der Außenverkleidung (3) befinden, und einer zweiten Stellung, in der die Außenhäute (41) sich hinter der Außenverkleidung (3) befinden und einen Schöpfer bilden, der es ermöglicht, durch die Öffnungen (43) in den Innenhäuten (40) Außenluft in den Schubgasstrom einzuführen, um die Infrarot-Strahlung der Schubgase zu verringern.

2. Düse nach Anspruch 1,
**dadurch gekennzeichnet,**
**dass** in der Hinterkante (42) jeder kalten Klappe (20) komplementäre Öffnungen (44) vorgesehen sind.

3. Düse nach einem der Ansprüche 1 oder 2,
**dadurch gekennzeichnet,**
**dass** die ersten Steuermittel einen ersten, axial bewegbaren Steuerring (10) beinhalten, der durch Schwingarme (9) mit den heißen Klappen (7) verbunden ist und durch eine Vielzahl von ersten Zylindern (11), die an dem konischen Ring (4) verankert sind, betätigt wird.

4. Düse nach einem der Ansprüche 1 bis 3,
**dadurch gekennzeichnet,**
**dass** die zweiten Steuermittel einen zweiten Steuerring (22) beinhalten, der unter der Einwirkung einer Vielzahl von zweiten Zylindern (23), die an dem ringförmigen Aufbau (12) verankert sind, axial bewegbar ist.

5. Düse nach Anspruch 4,
**dadurch gekennzeichnet,**
**dass** der zweite Steuerring (22) eine Vielzahl von Fingern (24) mit Rollen (25) aufweist, die in den Langlöchern (26) rollen, welche in den Innenhäuten der kalten Klappen (20) vorgesehen sind.

6. Düse nach einem der Ansprüche 1 bis 5,
**dadurch gekennzeichnet,**
**dass** der konische Ring (4) an seinem vorderen Ende mit einem zylindrischen Ring (5) verbunden ist, der sich nach hinten erstreckt, wobei dieser zylindrische Ring (5) Mittel zur axialen Führung des ringförmigen Aufbaus (12) aufweist, und dass die dritten Steuermittel eine Vielzahl von dritten Zylindern (30) beinhalten, die an dem vorderen Ende des zylindrischen Rings (5) verankert sind.

7. Düse nach Anspruch 6,
**dadurch gekennzeichnet,**
**dass** die Führungsmittel aus Rollen (16) bestehen, die mit den Rillen (17) zusammenwirken.
